# EUROPEAN PATENT SPECIFICATION

(11) **EP 2 804 346 B1**
(45) Date of publication and mention of the grant of the patent: **18.12.2019**
(21) Application number: 12869836.2
(22) Date of filing: 17.08.2012
(51) Int. Cl.: H04L 12/28

(54) **METHOD AND SYSTEM FOR DISCOVERING DLNA DEVICE AUTOMATICALLY**
VERFAHREN UND SYSTEM ZUR AUTOMATISCHEN ERKENNUNG EINER DLNA-VORRICHTUNG
PROCÉDÉ ET SYSTÈME DE DÉCOUVERTE AUTOMATIQUE D'UN DISPOSITIF DLNA

(30) Priority: 27.02.2012 CN 201210045609
(43) Date of publication of application: 19.11.2014
(73) Proprietor: Huawei Technologies Co., Ltd., Longgang District Shenzhen, Guangdong 518129 (CN)
(72) Inventor: ZHENG, Hewen, Shenzhen Guangdong 518129 (CN)
(74) Representative: Körber, Martin Hans
(86) International application number: PCT/CN2012/080276
(87) International publication number: WO 2013/127160

(56) References cited:
- EP-A1- 2 249 518
- EP-A1- 2 387 198
- CN-A- 101 809 933
- CN-A- 102 123 065
- FR-A1- 2 913 841
- JP-A- 2008 016 930
- JP-A- 2009 252 138
- US-A1- 2010 077 064
- Bill Rusell ET AL: "Remote Access Architecture:2", , 30 April 2011 (2011-04-30), pages 1-53, XP055159122, Internet Retrieved from the Internet: URL:http://upnp.org/specs/ra/UPnP-ra-RAArc hitecture-v2.pdf [retrieved on 2014-12-17]
- Andreas Fasbender ET AL: "Ericsson Review No. 2", , 1 January 2008 (2008-01-01), pages 58-63, XP055481704, Retrieved from the Internet: URL:https://pdfs.semanticscholar.org/b15a/ e3c6c06d0040f434e5964397b86d2e91989c.pdf [retrieved on 2018-06-06]

## Description

### TECHNICAL FIELD

The present invention belongs to the field of communications, and in particular, relates to a technology for automatically discovering a DLNA device.

### BACKGROUND

The Digital Living Network Alliance (Digital Living Network Alliance, DLNA) is a digital home device specification, with a purpose of implementing content sharing among consumer electronic devices without additional configuration, that is, the so-called automatic digital content sharing. As a basic protocol for a future digital home, the DLNA gains wide support from terminal vendors, chip vendors, standard organizations, and operators. Devices supporting a DLNA function (that is, DLNA devices) are connected to a same broadcast domain over a local area network. Most commonly, consumer electronic devices supporting a DLNA function are connected to a same broadcast domain over a home network, and then by using a DLNA protocol, digital content on each home electronic device, such as a video, can be automatically discovered by another device and shared across devices. For example, a television in a living room can automatically discover, by using the DLNA protocol, a video program on a computer that also supports the DLNA protocol in a study, and can obtain, over the network, the video program to the television in the living room for playing.

In an existing technology for automatically discovering a DLNA device, a DLNA device automatically discovers another DLNA device on a home network by using the Simple Service Discovery Protocol of the DLNA protocol suite; and the DLNA device automatically discovers, by using the Universal Plug and Play protocol of the DLNA protocol suite, a list of available digital content on the another DLNA device found in the previous step, so that the DLNA device can access, by using HTTP or RTP, digital content that has been discovered on the another DLNA device, such as a video program.

Currently, a digital content service provider (for example, an IPTV service provider or an OTT video content service provider) begins to provide a home network with a video source service over a network, so that the Cloud DLNA service becomes possible both commercially and technically. The Cloud DLNA service is that a digital content service provider provides, on a network and based on the DLNA, a home network with digital content sharing. From the perspective of a DLNA device on the home network of a user, the digital content is from a DLNA device on the network. The digital content service provider develops a content data center of the data content service provider into a virtual home network entertainment center (Cloud DLNA) by using a cloud computing technology. The Cloud DLNA is formed of a large number of virtual DLNA devices and allocates a virtual DLNA device for each home network, so that each home network can implement automatic access to open content of the digital content service provider or share content of the home network with a specified user or user group by using the virtual DLNA device obtained. A Cloud DLNA device is an entity that provides a DLNA virtual device function for a plurality of customers based on a virtualization technology, and may be a server, or may also be a dedicated device or embedded in a network device.

In a process of implementing the present invention, a technical solution in the prior art has the following disadvantage:
In the prior art, a DLNA device automatically discovers another DLNA device by using a multicast packet of the SSDP protocol. When the multicast packet arrives at a network routing device, such as a broadband remote access server (Broadband Remote Access Server, BRAS), from a Cloud DLNA device, the BRAS discards the SSDP multicast packet due to a lack of an extra multicast forwarding routing table, so that the SSDP multicast packet cannot arrive at a DLNA device on a home network, and therefore the DLNA device on the home network cannot automatically discover a virtual DLNA device in the Cloud DLNA.

FR 2913841 A1 describes a process of access with at least an available resource in a first communication network including a plurality of first devices, by at least a second device of a second communication network including a plurality of second devices, the aforementioned process being implemented by a first administrative device of the first communication network. At least one of the aforesaid second devices, said second authenticated device, includes information of authentification associated with right of access to the aforementioned resource.

XP055159122, "Remote Access Architecture: 2", 30 April 2011, pages 1 - 53, XP055159122, describes an architecture that provides the infrastructure that allows generic UPnP devices, services and control points deployed in remote physical devices to interact with the corresponding UPnP devices, services and control points physically attached to the home network.

US 2010/0077064 A1 describes a method for providing a remedy to the problem of address conflict when setting up a communications tunnel between a first tunnel end-point of a first communications sub-network and a second tunnel end-point of a second communications sub-network distinct from said first sub-network, in proposing an efficient method for the dynamic management of the address spaces of each sub-network, implemented by a tunnel end-point upon detection of a request for linking two sub-networks by a tunnel.

EP 2 249 518 A1 describes a media server located in a network of a service provider. Media content is stored from or rendered to a user's private network, such as a Digital Living Network Alliance (DLNA) network. A tunnel is established between an endpoint in the DLNA network through the service provider infrastructure, where the tunnel is associated with a physical address of the media server. Subsequently, a session may be established between a DLNA device and the media server through the tunnel using a virtual address, where the media server is addressable as a virtual device within the DLNA network and the virtual address is part of an address space of the DLNA network.

The document EP 2 387 198 A1 describes a method, gateway device and content distribution system generating a virtual digital media renderer DMR. A digital media controller DMC and a digital media server DMS communicate with the virtual DMR. A piece of content to be reproduced is designated among content stored in the content server using the content reproduction controller. A transmission gateway device comprising a transmission mechanism relays communication destined for the virtual DMR to a reception gateway device comprising a reception mechanism.

Document Andreas Fasbender et al: "Ericsson Review No. 2", 1 January 2008, pages 58-63, XP055481704 shows a method and system comprising a home IMS gateway, which functions as both the IMS user agent and termination point of the VPN tunnel in the home. After successful authentication and authorization a remote client, e.g. a mobile phone, sets up a secure media control session between itself and the home IMS gateway. After tunnel setup, the connection between the remote client and the NAS in the home network appears as a local UPnP connection. UPnP device discovery messages are filtered in the remote access server, which is co-located with the home IMS gateway, and forwarded to remote peers, e.g. the mobile phone, by unicast. The mobile phone retrieves a list of home media servers and their UPnP service descriptions.

### SUMMARY

Embodiments of the present invention aim at providing a method and a system for automatically discovering a DLNA device and solving a problem in an existing technical solution that a DLNA device cannot automatically discover another DLNA device.

The invention is carried out according to the appended independent claims. Optional features of the invention are carried out according to the dependent claims. However, technical descriptions of apparatus, products and/or methods in the description and/or drawings which are not covered by the claims are presented not as embodiments of the invention but as background art or examples useful for understanding the invention.

According to one aspect, the embodiments of the present invention provide a method for automatically discovering a physical Digital Living Network Alliance (DLNA) device in a direction from a home gateway to a Cloud DLNA device, including:
encapsulating, by a forwarding device, when a DLNA automatic discovery packet sent by a physical DLNA device is intercepted by the forwarding device in a transparent manner, a protocol packet header in the DLNA automatic discovery packet, where the protocol packet header includes a home network identity, and the home network identity uniquely identifies a home network on which the physical DLNA device works; and
sending, by the forwarding device, the DLNA automatic discovery packet in which the protocol packet header is encapsulated to a Cloud DLNA device, so that the Cloud DLNA device sends the DLNA automatic discovery packet to a virtual DLNA device corresponding to the home network identity after removing the protocol packet header from the DLNA automatic discovery packet, and therefore the virtual DLNA device discovers, by using the DLNA automatic discovery packet, the physical DLNA device corresponding to the home network identity; wherein the virtual DLNA device is a DLNA device that is virtualized on the Cloud DLNA device by using a virtualization technology and allocated for the home network, and there is a one-to-one mapping relationship between the home network identity, the physical DLNA device and the virtual DLNA device;
wherein the method is specifically:
   sending, by a broadband remote access server, BRAS, after the BRAS intercepts the DLNA automatic discovery packet from a broadband home network in a transparent manner and encapsulates the protocol packet header comprising the home network identity in the packet, the DLNA automatic discovery packet in which encapsulation is completed to the Cloud DLNA device, so that the Cloud DLNA device sends the DLNA automatic discovery packet to the virtual DLNA device corresponding to the home network identity after removing the protocol packet header from the DLNA automatic discovery packet, and therefore the virtual DLNA device discovers, by using the DLNA automatic discovery packet, the physical DLNA device corresponding to the home network identity;
   wherein the home network identities between a home gateway, a BRAS, and a Cloud DLNA device are inconsistent;
   wherein the home network identity is an implicit home network identity or an explicit home network identity, wherein a presentation manner of an explicit home network identity comprises: inserting a home network identity to an original message format, a presentation manner of an implicit home network identity comprises: not changing an original message, carrying a home network identity in the original message;
   wherein the inserting and the removing of the home network identity comprises a translation of different identities of a same home network user and the translation is translation between an explicit identity and an implicit identity or translation between implicit identities in different forms.

According to another aspect, the embodiments of the present invention provide a method for automatically discovering a virtual DLNA device, where the method includes
encapsulating, by a Cloud DLNA device, when a DLNA automatic discovery packet sent by a virtual DLNA device is intercepted by the Cloud DLNA device in a transparent manner, a protocol packet header in the DLNA automatic discovery packet, where the protocol packet header includes a home network identity, the home network identity uniquely identifies a home network, and the virtual DLNA device is a DLNA device that is virtualized on the Cloud DLNA device by using a virtualization technology and allocated for the home network; and
sending, by the Cloud DLNA device, the DLNA automatic discovery packet in which the protocol packet header is encapsulated to a forwarding device, so that the forwarding device sends the DLNA automatic discovery packet to a physical DLNA device corresponding to the home network identity after removing the protocol packet header from the DLNA automatic discovery packet, and therefore the physical DLNA device discovers, by using the DLNA automatic discovery packet, the virtual DLNA device corresponding to the home network identity; wherein there is a one-to-one mapping relationship between the home network identity, the physical DLNA device and the virtual DLNA device
wherein the method is specifically:
   encapsulating, by a Cloud DLNA device after the Cloud DLNA device intercepts the DLNA automatic discovery packet sent by the virtual DLNA in a transparent manner, the protocol packet header in the discovery packet, wherein the packet header comprises the home network identity; and sending the DLNA automatic discovery packet in which the protocol packet header is encapsulated to a broadband remote access server, BRAS, so that the BRAS forwards the DLNA automatic discovery packet to a home gateway after removing the protocol packet header from the DLNA automatic discovery packet, and therefore the home gateway can send the DLNA automatic discovery packet to the physical DLNA device corresponding to the home network identity, and the physical DLNA device discovers, by using the DLNA automatic discovery packet, the virtual DLNA device corresponding to the home network identity;
   wherein the home network identities between a home gateway, a BRAS, and a Cloud DLNA device are inconsistent;
   wherein the home network identity is an implicit home network identity or an explicit home network identity, wherein a presentation manner of an explicit home network identity comprises: inserting a home network identity to an original message format, a presentation manner of an implicit home network identity comprises: not changing an original message, carrying a home network identity in the original message;
   wherein the inserting and the removing of the home network identity comprises a translation of different identities of a same home network user and the translation is translation between an explicit identity and an implicit identity or translation between implicit identities in different forms.

According to a third aspect, the embodiments of the present invention provide a system for automatically discovering a physical DLNA device, including:
a physical DLNA device, a forwarding device, and a Cloud DLNA device, where:
the Cloud DLNA device supports one or more virtual DLNA devices that are virtualized on the Cloud DLNA device by using a virtualization technology;
the forwarding device is configured to: when a DLNA automatic discovery packet sent by the physical DLNA device is intercepted in a transparent manner, encapsulate a protocol packet header in the DLNA automatic discovery packet, where the protocol packet header includes a home network identity, and the home network identity uniquely identifies a home network on which the physical DLNA device works; and send, in a direction from a home gateway, the DLNA automatic discovery packet in which the protocol packet header is encapsulated to the Cloud DLNA device; and
   the Cloud DLNA device is configured to send the DLNA automatic discovery packet to a virtual DLNA device corresponding to the home network identity after removing the protocol packet header from the DLNA automatic discovery packet, so that the virtual DLNA device discovers, by using the DLNA automatic discovery packet, the physical DLNA device corresponding to the home network identity; wherein the virtual DLNA device is allocated for the home network, and there is a one-to-one mapping relationship between the home network identity, the physical DLNA device and the virtual DLNA device;
   wherein the forwarding device is a broadband remote access server, BRAS; and
   the BRAS is specifically configured to: after the DLNA automatic discovery packet from a broadband home network is intercepted in a transparent manner and the protocol packet header comprising the home network identity is encapsulated in the packet, send the DLNA automatic discovery packet in which the protocol packet header is encapsulated to the Cloud DLNA device;
   wherein the home network identities between a home gateway, a BRAS, and a Cloud DLNA device are inconsistent;
   wherein the home network identity is an implicit home network identity or an explicit home network identity, wherein a presentation manner of an explicit home network identity comprises: inserting a home network identity to an original message format, a presentation manner of an implicit home network identity comprises: not changing an original message, carrying a home network identity in the original message;
   wherein the inserting and the removing of the home network identity comprises a translation of different identities of a same home network user and the translation is translation between an explicit identity and an implicit identity or translation between implicit identities in different form.

According to a fourth aspect, the embodiments of the present invention provide a system for automatically discovering a virtual DLNA device, including:
a Cloud DLNA device, a forwarding device, and a physical DLNA device, where:
the Cloud DLNA device supports one or more virtual DLNA devices that are virtualized on the Cloud DLNA device by using a virtualization technology;
the Cloud DLNA device is configured to encapsulate, when a DLNA automatic discovery packet sent by a virtual DLNA device is intercepted in a transparent manner, a protocol packet header in the DLNA automatic discovery packet, where the packet header includes a home network identity, and the home network identity uniquely identifies a home network, and the virtual DLNA device is allocated for the home network;
the Cloud DLNA device is further configured to send a DLNA automatic discovery packet in which the protocol packet header is encapsulated to the forwarding device;
the forwarding device is configured to remove the protocol packet header from the DLNA automatic discovery packet, and send the DLNA automatic discovery packet to the physical DLNA device corresponding to the home network identity, wherein the physical DLNA device works on the home network, and there is a one-to-one mapping relationship between the home network identity, the physical DLNA device and the virtual DLNA device; and
   the physical DLNA device is configured to discover, by using the DLNA automatic discovery packet, the virtual DLNA device corresponding to the home network identity;
   wherein the forwarding device is a broadband remote access server, BRAS, and a home gateway;
   the BRAS is configured to remove the protocol packet header from the DLNA automatic discovery packet, and forward the DLNA automatic discovery packet to the home gateway; and
   the home gateway is configured to send the DLNA automatic discovery packet to the physical DLNA device corresponding to the home network identity;
   wherein the home network identities between a home gateway, a BRAS, and a Cloud DLNA device are inconsistent;
   wherein the home network identity is an implicit home network identity or an explicit home network identity, wherein a presentation manner of an explicit home network identity comprises: inserting a home network identity to an original message format, a presentation manner of an implicit home network identity comprises: not changing an original message, carrying a home network identity in the original message;
   wherein the inserting and the removing of the home network identity comprises a translation of different identities of a same home network user and the translation is translation between an explicit identity and an implicit identity or translation between implicit identities in different forms.

In the technical solutions provided in the present invention, a packet header including a home network identity is added to a DLNA automatic discovery packet, so that the DLNA automatic discovery packet can be sent to a Cloud DLNA device, and the Cloud DLNA device sends the automatic discovery packet to a virtual DLNA device corresponding to the home network identity, thereby implementing automatic discovery between a DLNA device on a home network and a virtual DLNA device in the Cloud DLNA.

### BRIEF DESCRIPTION OF DRAWINGS

FIG.1 is a flowchart of a method for automatically discovering a physical DLNA device according to a specific implementation manner of the present invention;
FIG. 2 is a flowchart of a method for automatically discovering a virtual DLNA device according to a specific implementation manner of the present invention;
FIG. 3 is a schematic structural diagram of a network according to an embodiment of the present invention;
FIG. 4 is a schematic diagram of packet forwarding and processing for an SSDP multicast packet that is sent by a physical DLNA device on a home network and arrives at a Cloud DLNA device according to an embodiment of the present invention;
FIG. 5 is a schematic diagram of processing an SSDP multicast packet that is sent by a Cloud DLNA device and arrives at a home gateway according to an embodiment of the present invention;
FIG. 6 is a schematic structural diagram of a network according to another embodiment of the present invention;
FIG. 7 is a schematic diagram of processing an SSDP multicast packet that is in a home gateway and arrives at a Cloud DLNA device according to another embodiment of the present invention;
FIG. 8 is a schematic diagram of processing an SSDP multicast packet that is sent by a Cloud DLNA device and arrives at a home gateway according to another embodiment of the present invention;
FIG. 9 is a schematic diagram of a frame header format of a GRE packet according to a specific embodiment of the present invention;
FIG. 10 is a schematic diagram of an IP header format of a GRE packet according to a specific embodiment of the present invention;
FIG. 11 is a schematic diagram of a GRE header format of a GRE packet according to a specific embodiment of the present invention; and
FIG. 12 is a schematic diagram of an IP header format in GRE packet load according to a specific implementation manner of the present invention.

### DESCRIPTION OF EMBODIMENTS

To make the objectives, technical solutions, and advantages of the present invention clearer, the following further describes the present invention in detail with reference to the accompanying drawings and embodiments. It should be understood that the specific embodiments described herein are merely intended to explain the present invention, but are not intended to limit the present invention.

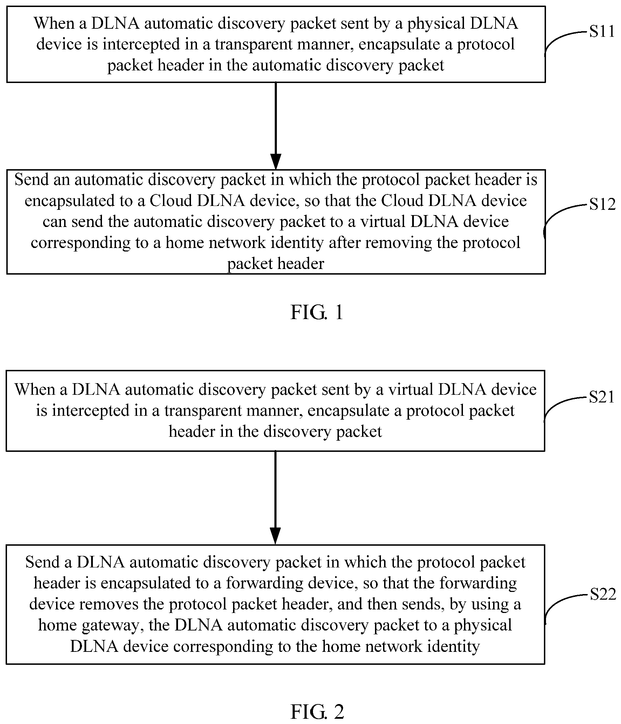

The present invention provides a method for automatically discovering a physical DLNA device. The method is executed by a home gateway or a BRAS. In the method, a sending direction of a DLNA automatic discovery packet is sending from a home gateway to a Cloud DLNA device. As shown in FIG. 1, the method includes:
S11. When a DLNA automatic discovery packet sent by a physical DLNA device is intercepted in a transparent manner, encapsulate a protocol packet header in the automatic discovery packet, where the packet header includes a home network identity.

It should be noted that there is a one-to-one mapping relationship between the home network identity and the DLNA device (including a physical DLNA device and a virtual DLNA device) described above. In addition, it should be noted that, according to the SSDP protocol, there are two DLNA devices corresponding to the home network identity, where one may be a DLNA device on a home network and is generally called a physical DLNA device, and the other is a DLNA device that is virtualized on a Cloud DLNA device by using a virtualization technology and is generally called a virtual DLNA device.

S12. Send an automatic discovery packet in which the protocol packet header is encapsulated to a Cloud DLNA device, so that the Cloud DLNA device sends the automatic discovery packet to a virtual DLNA device corresponding to the home network identity after removing the protocol packet header from the DLNA automatic discovery packet, and therefore the virtual DLNA device discovers, by using the DLNA automatic discovery packet, the physical DLNA device corresponding to the home network identity.

It should be noted that, in the foregoing S12, the method for sending the DLNA automatic discovery packet may include: sending, in a unicast manner, the DLNA automatic discovery packet to the virtual DLNA device corresponding to the home network identity; and certainly, may also be: multicasting, in a multicast manner, the DLNA automatic discovery packet on a network on which the virtual DLNA device corresponding to the home network identity is located.

In the technical solution provided in the specific implementation manner of the present invention, the packet header including the home network identity is added to the DLNA automatic discovery packet, so that the DLNA automatic discovery packet can arrive at the Cloud DLNA device, and the Cloud DLNA device can send the automatic discovery packet to the virtual DLNA device corresponding to the home network identity. According to the SSDP protocol, when receiving the DLNA automatic discovery packet, the virtual DLNA device can automatically discover another DLNA device according to the DLNA automatic discovery packet (that is, discover the physical DLNA device corresponding to the identity). Therefore, the technical solution has an advantage of automatically discovering a physical DLNA device.

It should be noted that the home network identity may specifically include: a home network user identity or an individual user identity that belongs to a home network user account, where the identity is used to uniquely identify a home network on which DLNA works.

Optionally, the method may specifically be:
sending, by a home gateway after the home gateway intercepts the DLNA automatic discovery packet in a transparent manner and encapsulates the protocol packet header including the home network identity in the automatic discovery packet, the DLNA automatic discovery packet to the Cloud DLNA device on a network side by using a pre-established tunnel, so that the Cloud DLNA device can send the DLNA automatic discovery packet to the virtual DLNA device corresponding to the home network identity after removing the protocol packet header from the DLNA automatic discovery packet, and in this way, according to the SSDP protocol, the virtual DLNA device that receives the DLNA automatic discovery packet can discover another DLNA device (that is, the physical DLNA device) according to the DLNA automatic discovery packet.

Optionally, the method may specifically be:
sending, by a BRAS device after the BRAS device intercepts the DLNA automatic discovery packet from a broadband home network user in a transparent manner and encapsulates the protocol packet header including the home network identity in the DLNA automatic discovery packet, the DLNA automatic discovery packet to the Cloud DLNA device, so that the Cloud DLNA device can send the DLNA automatic discovery packet to the virtual DLNA device corresponding to the home network identity after removing the protocol packet header from the DLNA automatic discovery packet.

Optionally, before the step of removing, by the Cloud DLNA device, the protocol packet header from the DLNA automatic discovery packet in S12, the method may further include:
verifying, by the Cloud DLNA device, validity of the home network identity in the protocol packet header, and discarding a DLNA automatic discovery packet that forges a home network identity. Verification of the validity of the home network identity can improve security of a user account corresponding to the home network identity and transmitted digital content.

Optionally, the home network identity may be an implicit home network identity or an explicit home network identity. It should be noted that a presentation manner of an explicit home network identity may specifically be: adding a home network identity to an original message format and clearly defining a meaning of the identity; and a presentation manner of an implicit home network identity may specifically be: not changing an original message, carrying a home network identity in the original message, and not clearly defining the identity, for example, a home network identity carried in a customized field of an original message is an implicit home network identity.

A specific implementation manner of the present invention further provides a method for automatically discovering a virtual DLNA device. The method is executed by a Cloud DLNA device. In the method, a sending direction of a DLNA automatic discovery packet is opposite to that in the solution of FIG. 1, that is, sending from a Cloud DLNA device to a home network. As shown in FIG. 2, the method includes:
S21. When a DLNA automatic discovery packet sent by a virtual DLNA device is intercepted in a transparent manner, encapsulate a protocol packet header in the discovery packet, where the packet header includes a home network identity.
S22. Send a DLNA automatic discovery packet that encapsulates the protocol packet header to a forwarding device, so that the forwarding device removes the protocol packet header from the DLNA automatic discovery packet, and then sends, by using the home gateway, the DLNA automatic discovery packet to a physical DLNA device corresponding to the home network identity, and therefore the physical DLNA device discovers, according to the DLNA automatic discovery packet, the virtual DLNA device corresponding to the home network identity.

In the technical solution provided in the specific implementation manner of the present invention, the packet header including the home network identity is added to the DLNA automatic discovery packet, so that the home network can receive the DLNA automatic discovery packet, and forwards the DLNA automatic discovery packet to the physical DLNA device corresponding to the home network identity. According to a stipulation of the SSDP protocol, the physical DLNA device can automatically discover another DLNA device (that is, the virtual DLNA device corresponding to the identity) according to the DLNA automatic discovery packet. Therefore, the technical solution has an advantage of automatically discovering a virtual DLNA device.

Optionally, a specific manner of the method may be:
encapsulating, by the Cloud DLNA device when the Cloud DLNA device intercepts the DLNA automatic discovery packet sent by the virtual DLNA device in a transparent manner, the protocol packet header in the DLNA automatic discovery packet, where the packet header includes the home network identity; and sending the DLNA automatic discovery packet in which the protocol packet header is encapsulated to the home gateway by using a pre-established tunnel (for a method for establishing a tunnel, reference may be made to descriptions of an embodiment, and details are not described herein again), so that the home gateway sends the DLNA automatic discovery packet to the physical DLNA device corresponding to the home network identity after removing the protocol packet header from the DLNA automatic discovery packet.

Optionally, in the foregoing method, before the home gateway removes the protocol packet header, the method may further include:
verifying, by the home gateway, validity of the home network identity in the protocol packet header, and discarding a DLNA automatic discovery packet that forges a home network identity.

Optionally, a specific manner of the method may further be:
encapsulating, by the Cloud DLNA device when the Cloud DLNA device intercepts the DLNA automatic discovery packet sent by the virtual DLNA device in a transparent manner, the protocol packet header in the DLNA automatic discovery packet, where the packet header includes the home network identity;
and sending the DLNA automatic discovery packet in which the protocol packet header is encapsulated to a BRAS, so that the BRAS forwards the DLNA automatic discovery packet to the home gateway after removing the protocol packet header from the DLNA automatic discovery packet, and then sends, by using the home gateway, the DLNA automatic discovery packet to the physical DLNA device corresponding to the home network identity.

Optionally, the home network identity may be an implicit home network identity or an explicit home network identity. For an implicit or explicit presentation manner, reference may be made to the description of the foregoing embodiment, and details are not described herein again.

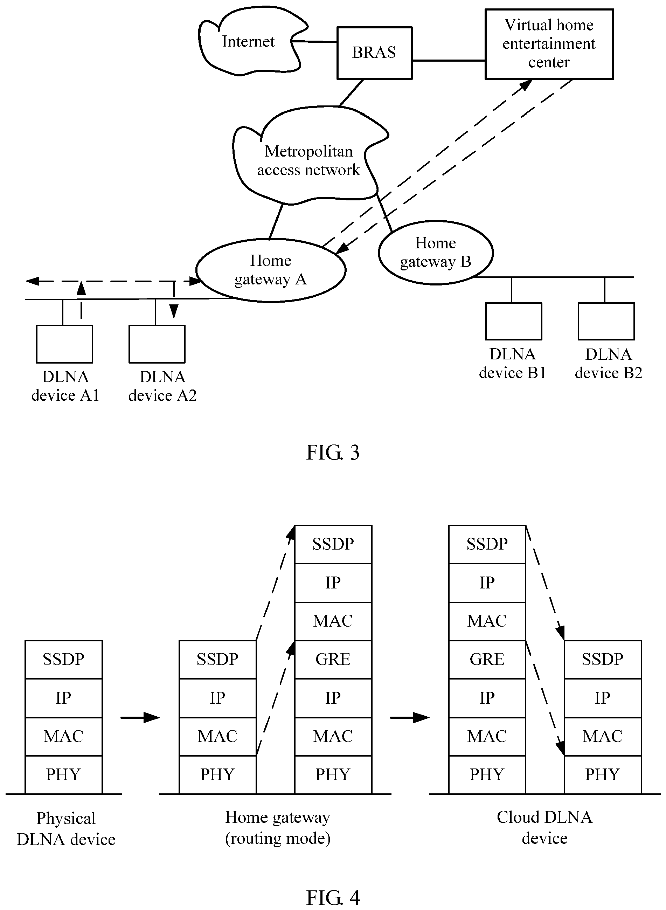

A specific embodiment of the present invention provides an embodiment. The embodiment provides a method for automatically discovering a DLNA device, and a technical scenario for implementing the embodiment is: A home gateway operates in a routing mode, and a tunnel (where the tunnel bears a Layer 2 packet) is pre-established between the home gateway and a Cloud DLNA device, where the tunnel may be a tunnel established by using a Generic Routing Encapsulation (Generic Routing Encapsulation, GRE) technology or a Layer 2 tunnel established based on a Multiprotocol Label Switching (MPLS) technology, such as VPLS; the home gateway joins an SSDP multicast group (for example, an IPv4 multicast group 239.255.255.250) of a home network in a transparent manner and intercepts an SSDP multicast packet, and the Cloud DLNA device joins an SSDP multicast group (239.255.255.250) of a virtual DLNA device in a transparent manner and intercepts an SSDP multicast packet, where the transparent manner means only passively receiving an SSDP multicast packet instead of actively sending an SSDP multicast packet, and to join means to connect to a located network (which is a home network for the home gateway, and is a broadcast network where a virtual DLNA device is located for the Cloud DLNA device) and to monitor an SSDP multicast packet. A schematic structural diagram of a network of the method is shown in FIG. 3, and the method provided in the embodiment includes:
In a direction from a home gateway to a Cloud DLNA device:
After intercepting a DLNA automatic discovery packet and encapsulating a home network identity in the discovery packet, the home gateway sends the DLNA automatic discovery packet in which the home network identity is encapsulated to a peer end (that is, the Cloud DLNA device on a network side) by using an established Layer 2 tunnel; and the Cloud DLNA device removes the home network identity after receiving the DLNA automatic discovery packet forwarded by the home gateway, and then multicasts the DLNA automatic discovery packet on a network on which a virtual DLNA device corresponding to the home network identity is located.

It is assumed that here the established Layer 2 tunnel may be a Layer 2 tunnel established by using a Generic Routing Encapsulation (Generic Routing Encapsulation, GRE) technology. Certainly, in an actual situation, another manner may also be used to establish the Layer 2 tunnel. For example, MPLS or VPLS is used to establish the Layer 2 tunnel. When the GRE technology is used to establish the Layer 2 tunnel, packet forwarding and processing for an SSDP multicast packet (that is, a DLNA automatic discovery packet) that is sent from a physical DLNA device on a home network and arrives at a virtual DLNA device on a Cloud DLNA device is shown in FIG. 4. As shown in FIG. 4, it should be noted that, in FIG. 4, an IP address in a GRE packet header may be a source IP address and a destination IP address of the tunnel, and MAC addresses in the GRE packet header are a source MAC address and a destination MAC address of the tunnel; and an IP address in the SSDP packet may be a source IP address and a destination IP address in the SSDP packet, and MAC addresses in the SSDP packet are a source MAC address and a destination MAC address of the SSDP packet.

Further, the Cloud DLNA device may verify validity of the home network identity in the protocol packet header and discard a DLNA automatic discovery packet that forges a home network identity, so as to ensure security of a user account and digital content and improve network security.

Further, if the Cloud DLNA device is interconnected in a form of a multi-level architecture, after the Cloud DLNA device receives the DLNA automatic discovery packet that is forwarded by the home gateway or a DLNA automatic discovery packet (that is, an SSDP multicast packet) that is forwarded by another Cloud DLNA device, the Cloud DLNA device removes the home network identity from the DLNA automatic discovery packet and forwards the DLNA automatic discovery packet to a virtual DLNA device (which is corresponding to the home network identity) of the Cloud DLNA device, and also needs to send the DLNA automatic discovery packet carrying the home network identity to another device (such as another home gateway or another Cloud DLNA device) that is interested in the physical DLNA device.

In a direction from the Cloud DLNA device to the home gateway:
After intercepting the DLNA automatic discovery packet sent by the virtual DLNA device and encapsulating the home network identity in the packet, the Cloud DLNA device sends the packet to the home gateway by using the Layer 2 tunnel; and the home gateway removes the home network identity and then multicasts the DLNA automatic discovery packet on the home network after receiving the DLNA automatic discovery packet (the SSDP multicast packet) from the Cloud DLNA device.

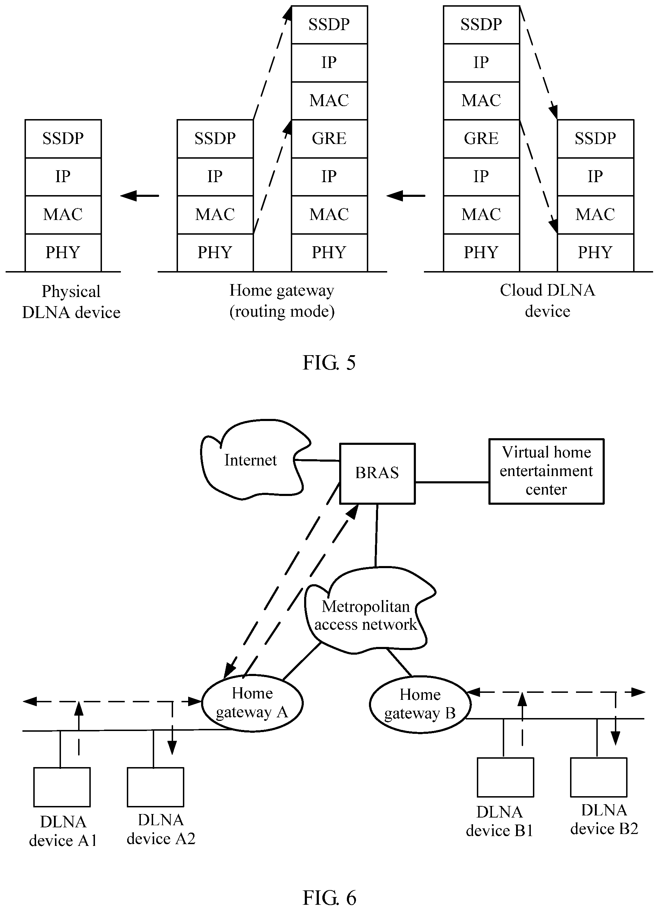

When the Layer 2 tunnel is established by using the GRE technology, packet forwarding and processing for an SSDP multicast packet that is sent from the virtual DLNA device on the Cloud DLNA device and arrives at the physical DLNA device on the home network is shown in FIG. 5. It should be noted that, in FIG. 5, an IP address in a GRE packet header may be a source IP address and a destination IP address of the tunnel, and MAC addresses in the GRE packet header are a source MAC address and a destination MAC address of the tunnel; and an IP address in the SSDP packet may be a source IP address and a destination IP address in the SSDP packet, and MAC addresses in the SSDP packet are a source MAC address and a destination MAC address of the SSDP address.

Further, the home gateway may verify validity of the home network identity in the protocol packet header and discard a DLNA automatic discovery packet that forges a home network identity after receiving the DLNA automatic discovery packet (the SSDP multicast packet) from the Cloud DLNA device, so as to ensure security of a user account and digital content and improve network security.

It should be noted that the home network identity may be replaced with an individual user identity that belongs to a home network account.

In addition, it should be noted that the home network identity may be explicit, or may also be implicit; and an explicit home network identity may be inserted into the SSDP multicast packet, and an implicit home network identity may use an identity of the tunnel itself, for example, an identity of a GRE tunnel itself (a source address or a destination address of the GRE tunnel).

A specific implementation manner of the present invention provides another embodiment. The embodiment provides a method for automatically discovering a DLNA device, and a technical scenario for implementing the embodiment is: In the embodiment, a home gateway operates in a bridging mode; a first Layer 3 forwarding device, such as a BRAS, joins an SSDP multicast group (for example, an IPv4 multicast group 239.255.255.250) of a home network in a transparent manner and intercepts an SSDP multicast packet, and a Cloud DLNA device joins an SSDP multicast group (239.255.255.250) of a virtual DLNA device in a transparent manner and intercepts an SSDP multicast packet, where the transparent manner means only passively receiving an SSDP multicast packet instead of actively sending an SSDP multicast packet. In the embodiment, a BRAS is used as an example of the first Layer 3 forwarding device. A schematic structural diagram of a network for implementing the embodiment is shown in FIG. 6. For convenience of description, the embodiment merely describes a technical solution different from that described in the foregoing embodiment, and the method may specifically include:
In a direction from a home gateway to a Cloud DLNA device:
After receiving a DLNA automatic discovery packet from a broadband home network and encapsulating a home network identity in the packet, a BRAS device sends the packet to the Cloud DLNA device.

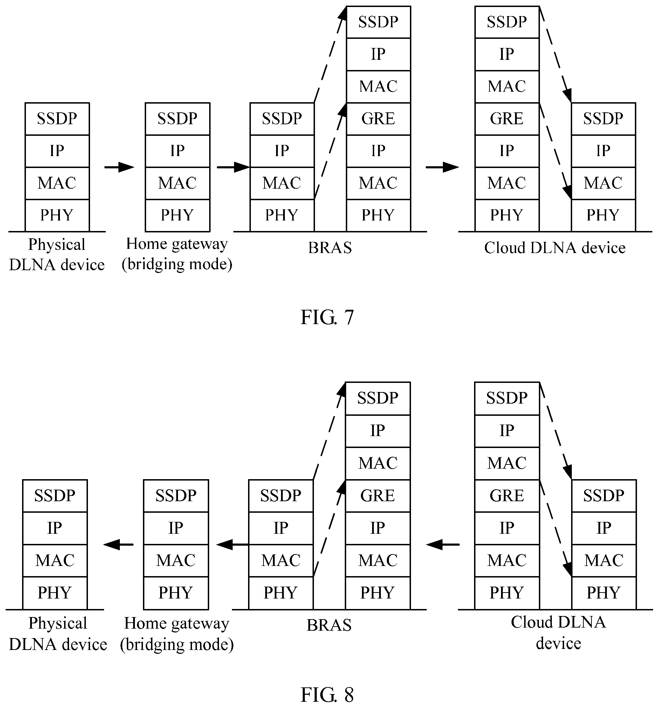

When a GRE technology is used to establish a Layer 2 tunnel, packet forwarding and processing for an SSDP multicast packet that is sent from a physical DLNA device on a home network and arrives at a virtual DLNA device on the Cloud DLNA device is shown in FIG. 7. It should be noted that, in FIG. 7, an IP address in a GRE packet header may be a source IP address and a destination IP address of the tunnel, and MAC addresses in the GRE packet header are a source MAC address and a destination MAC address of the tunnel; and an IP address in the SSDP packet may be a source IP address and a destination IP address in the SSDP packet, and MAC addresses in the SSDP packet are a source MAC address and a destination MAC address of the SSDP packet.

Further, the Cloud DLNA device may verify validity of the home network identity in the protocol packet header and discard a DLNA automatic discovery packet that forges a home network identity.

In a direction from the Cloud DLNA device to the home gateway:
After intercepting the DLNA automatic discovery packet sent by the virtual DLNA device and encapsulating the home network identity in the packet, the Cloud DLNA device sends the packet to the BRAS; after receiving the DLNA automatic discovery packet (the SSDP multicast packet) from the Cloud DLNA device, the BRAS removes the home network identity, and then sends the DLNA automatic discovery packet to the home gateway; and the home gateway multicasts the DLNA automatic discovery packet on the home network.

When the Layer 2 tunnel is established by using the GRE technology, packet forwarding and processing for an SSDP multicast packet that is sent from the virtual DLNA device on the Cloud DLNA device and arrives at the physical DLNA device on the home network is shown in FIG. 8. It should be noted that, in FIG. 8, an IP address in a GRE packet header may be a source IP address and a destination IP address of the tunnel, and MAC addresses in the GRE packet header are a source MAC address and a destination MAC address of the tunnel; and an IP address in the SSDP packet may be a source IP address and a destination IP address in the SSDP packet, and MAC addresses in the SSDP packet are a source MAC address and a destination MAC address of the SSDP packet.

In the foregoing process, the home network identity may be explicit, or may also be implicit; and an explicit home network identity may be inserted into the SSDP multicast packet, and an implicit home network identity may use an identity of the tunnel itself. In the bridging mode, an implicit identity may be an identity that can be carried by an Ethernet bridged network itself, such as a VLAN ID.

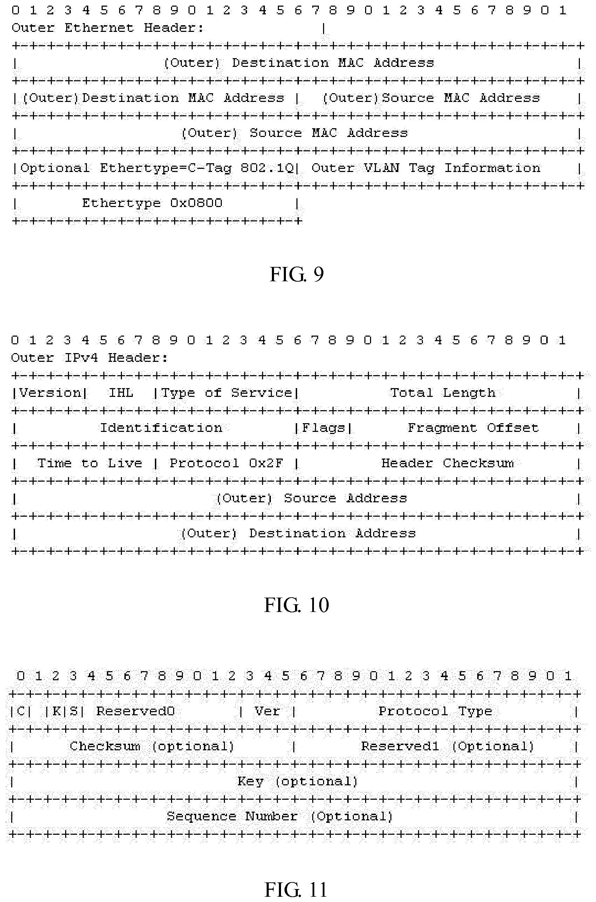

Certainly, in an actual situation, an implicit home network identity may use an identity of a tunnel itself, for example, an identity of a GRE tunnel itself (a source address or a destination address of the GRE tunnel). Certainly, the identity may also use another access identity. A GRE packet is encapsulated in an IP packet header, and FIG. 9 shows an Ethernet frame header bearing a GRE packet, where the Ethernet frame header is the same as a common Ethernet frame header bearing an IP packet. The GRE packet is a unicast IP packet, and therefore a source MAC address and a destination MAC address in the Ethernet frame header bearing the GRE packet are MAC addresses of host interfaces at both tunnel ends. In addition, the GRE packet is encapsulated in the IP packet header, FIG. 10 shows an IP header bearing a GRE packet, and except that an IP protocol number is 47, that is, 0x2F, there is no difference between this IP header and another IP header bearing a unicast packet. It can be seen that a GRE tunnel can be uniquely identified with a source IP address and a destination IP address, a combination of which can be used as an implicit home network user identity.

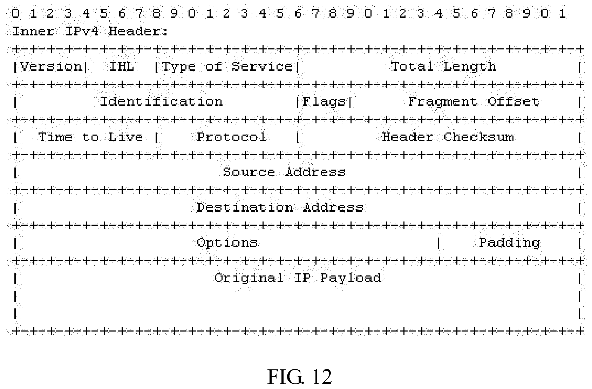

FIG. 11 shows a format of a bearer GRE packet header. In addition, an SSDP multicast packet is encapsulated in a GRE packet header. FIG. 12 shows a format of an IP packet borne in a GRE packet.

In addition, it should be noted that home network identities between a home gateway, a BRAS, and a Cloud DLNA device may be inconsistent. For example, from the home gateway to the BRAS, a VLAN ID is used as a home network identity; and from the BRAS to the Cloud DLNA device, a GRE tunnel identity is used as a home network identity. In the foregoing technical solutions, the so-called inserting or removing a home network user identity also includes conversion, that is, translation, of different identities of a same home network user; and the translation may be translation between an explicit identity and an implicit identity, and may also be translation between implicit identities in different forms.

The following describes how to perform the translation by using an actual example. For example, from the home gateway to the BRAS, a VLAN ID with a value of 1260 is used to identify a home network A; and from the BRAS to the Cloud DLNA, a GRE KEY-ID with a value of 2600 is used to identify the home network A; then a corresponding entry is maintained in the BRAS, where both the 1260 VLAN ID and the 2600 GRE KEY-ID are used to identify the home network A, and in this way, a DLNA message that is from the Cloud DLNA device and borne on a GRE tunnel whose GRE KEY-ID is 2600 is encapsulated with the VLAN ID of 1260 and sent to the home gateway, and vice versa. Certainly, in addition to the foregoing translation technology, other existing technologies may also be used to perform the translation, and are not illustrated herein.

The present invention further provides a system for automatically discovering a physical DLNA device, where the system includes:
a physical DLNA device, a forwarding device, and a Cloud DLNA device, where:
the Cloud DLNA device supports one or more virtual DLNA devices on the Cloud DLNA device;
the forwarding device is configured to: encapsulate, when a DLNA automatic discovery packet sent by the physical DLNA device is intercepted in a transparent manner, a protocol packet header in the DLNA automatic discovery packet, where the protocol packet header includes a home network identity; and send the DLNA automatic discovery packet in which the protocol packet header is encapsulated to the Cloud DLNA device; and
the Cloud DLNA device is configured to send the DLNA automatic discovery packet to a virtual DLNA device corresponding to the home network identity after removing the protocol packet header from the DLNA automatic discovery packet, so that the virtual DLNA device discovers, by using the DLNA automatic discovery packet, the physical DLNA device corresponding to the home network identity.

Optionally, the forwarding device is a home gateway, and the home gateway is specifically configured to: after the DLNA automatic discovery packet sent by the physical DLNA is intercepted in a transparent manner, encapsulate the protocol packet header including the home network identity in the DLNA automatic discovery packet, and send the DLNA automatic discovery packet in which the protocol packet header is encapsulated to the Cloud DLNA device by using a pre-established tunnel.

Optionally, the forwarding device is a broadband remote access server BRAS device; and
the BRAS device is specifically configured to send the DLNA automatic discovery packet in which the protocol packet header is encapsulated to the Cloud DLNA device after the DLNA automatic discovery packet from a broadband home network is intercepted in a transparent manner and the protocol packet header including the home network identity is encapsulated in the packet.

Optionally, the home network identity specifically includes: a home network user identity or an individual user identity that belongs to a home network user account.

Optionally, the Cloud DLNA device is further configured to: before removing the protocol packet header from the DLNA automatic discovery packet, verify validity of the home network identity in the protocol packet header, and discard a DLNA automatic discovery packet that forges a home network identity.

The present invention further provides a system for automatically discovering a virtual DLNA device, and the system includes: a Cloud DLNA device, a forwarding device, and a physical DLNA device, where:
the Cloud DLNA device supports one or more virtual DLNA devices on the Cloud DLNA device;
the Cloud DLNA device is configured to: when a DLNA automatic discovery packet sent by the virtual DLNA is intercepted in a transparent manner, encapsulate a protocol packet header in the DLNA automatic discovery packet, where the packet header includes a home network identity;
the Cloud DLNA device is further configured to send a DLNA automatic discovery packet in which the protocol packet header is encapsulated to the forwarding device;
the forwarding device is configured to remove the protocol packet header from the DLNA automatic discovery packet, and send the DLNA automatic discovery packet to the physical DLNA device corresponding to the home network identity; and
the physical DLNA device is configured to discover, by using the DLNA automatic discovery packet, the virtual DLNA device corresponding to the home network identity.

Optionally, the forwarding device is a home gateway;
the Cloud DLNA device is specifically configured to encapsulate the protocol packet header in the discovery packet after the DLNA automatic discovery packet sent by the virtual DLNA is intercepted in a transparent manner, where the packet header includes the home network identity; and the Cloud DLNA device is further configured to send, by using a pre-established tunnel, the DLNA automatic discovery packet in which the protocol packet header is encapsulated to the home gateway;
the home gateway is configured to remove the protocol packet header from the DLNA automatic discovery packet, and send the DLNA automatic discovery packet to the physical DLNA device corresponding to the home network identity; and
the home gateway is further configured to: before removing the protocol packet header from the DLNA automatic discovery packet, verify validity of the home network identity in the protocol packet header, and discard a DLNA automatic discovery packet that forges a home network identity.

Optionally, the forwarding device is a broadband remote access server BRAS and a home gateway;
the BRAS is configured to remove the protocol packet header from the DLNA automatic discovery packet, and forward the DLNA automatic discovery packet to the home gateway; and
the home gateway is configured to send the DLNA automatic discovery packet to the physical DLNA device corresponding to the home network identity.

Optionally, the home network identity specifically includes: a home network user identity or an individual user identity that belongs to a home network user account.

The method embodiments and the system embodiments of the present invention belong to a same invention idea. For a part not clearly described in the system embodiments, reference may be made to relevant descriptions in the method embodiments. In addition, in the present invention, a virtual DLNA device is obtained, by virtualization using software on a Cloud DLNA device. Therefore, the foregoing actions executed by the Cloud DLNA device in the embodiments of the present invention may be implemented by the Cloud DLNA device itself by using hardware, or may also be implemented by a virtual DLNA on the Cloud DLNA device.

A person skilled in the art may understand that all or a part of the steps of the technical solutions in the embodiments of the present invention may be implemented by a program instructing relevant hardware, for example, may be implemented by a computer running a program. The program may be stored in a computer readable storage medium, such as a random access memory, a magnetic disk, or an optical disk.

## Claims

1. A method for automatically discovering a physical Digital Living Network Alliance, DLNA device in a direction from a home gateway to a Cloud DLNA device, wherein the method comprises:
encapsulating (S11), by a forwarding device, when a DLNA automatic discovery packet sent by a physical DLNA device is intercepted by the forwarding device in a transparent manner, a protocol packet header in the DLNA automatic discovery packet, wherein the protocol packet header comprises a home network identity, and the home network identity uniquely identifies a home network on which the physical DLNA device works; and
sending (SI2), by the forwarding device, the DLNA automatic discovery packet in which the protocol packet header is encapsulated to the Cloud DLNA device, so that the Cloud DLNA device sends the DLNA automatic discovery packet to a virtual DLNA device corresponding to the home network identity after removing the protocol packet header from the DLNA automatic discovery packet, and therefore the virtual DLNA device discovers, by using the DLNA automatic discovery packet, the physical DLNA device corresponding to the home network identity; wherein the virtual DLNA device is a DLNA device that is virtualized on the Cloud DLNA device by using a virtualization technology and allocated for the home network, and there is a one-to-one mapping relationship between the home network identity, the physical DLNA device and the virtual DLNA device;
wherein the method is specifically:
sending, by a broadband remote access server, BRAS, after the BRAS intercepts the DLNA automatic discovery packet from a broadband home network in a transparent manner and encapsulates the protocol packet header comprising the home network identity in the packet, the DLNA automatic discovery packet in which encapsulation is completed to the Cloud DLNA device, so that the Cloud DLNA device sends the DLNA automatic discovery packet to the virtual DLNA device corresponding to the home network identity after removing the protocol packet header from the DLNA automatic discovery packet, and therefore the virtual DLNA device discovers, by using the DLNA automatic discovery packet, the physical DLNA device corresponding to the home network identity;
wherein the home network identities between a home gateway, a BRAS, and a Cloud DLNA device are inconsistent;
wherein the home network identity is an implicit home network identity or an explicit home network identity, wherein a presentation manner of an explicit home network identity comprises: inserting a home network identity to an original message format, a presentation manner of an implicit home network identity comprises: not changing an original message, carrying a home network identity in the original message;
wherein the inserting and the removing of the home network identity comprises a translation of different identities of a same home network user and the translation is translation between an explicit identity and an implicit identity or translation between implicit identities in different forms.

2. The method according to claim 1, wherein the home network identity specifically comprises: a home network user identity or an individual user identity that belongs to a home network user account.

3. A method for automatically discovering a virtual Digital Living Network Alliance, DLNA, device, wherein the method comprises:
Encapsulating (S21), by a Cloud DLNA device, when a DLNA automatic discovery packet sent by a virtual DLNA device is intercepted by the Cloud DLNA device in a transparent manner, a protocol packet header in the DLNA automatic discovery packet, wherein the packet header comprises a home network identity, the home network identity uniquely identifies a home network, and the virtual DLNA device is a DLNA device that is virtualized on the Cloud DLNA device by using a virtualization technology and allocated for the home network; and
Sending (S22), by the Cloud DLNA device, the DLNA automatic discovery packet in which the protocol packet header is encapsulated to a forwarding device, so that the forwarding device sends the DLNA automatic discovery packet to a physical DLNA device corresponding to the home network identity after removing the protocol packet header from the DLNA automatic discovery packet, and therefore the physical DLNA device discovers, by using the DLNA automatic discovery packet, the virtual DLNA device corresponding to the home network identity; wherein there is a one-to-one mapping relationship between the home network identity, the physical DLNA device and the virtual DLNA device
wherein the method is specifically:
encapsulating, by a Cloud DLNA device after the Cloud DLNA device intercepts the DLNA automatic discovery packet sent by the virtual DLNA in a transparent manner, the protocol packet header in the discovery packet, wherein the packet header comprises the home network identity; and sending the DLNA automatic discovery packet in which the protocol packet header is encapsulated to a broadband remote access server, BRAS, so that the BRAS forwards the DLNA automatic discovery packet to a home gateway after removing the protocol packet header from the DLNA automatic discovery packet, and therefore the home gateway can send the DLNA automatic discovery packet to the physical DLNA device corresponding to the home network identity, and the physical DLNA device discovers, by using the DLNA automatic discovery packet, the virtual DLNA device corresponding to the home network identity;
wherein the home network identities between a home gateway, a BRAS, and a Cloud DLNA device are inconsistent;
wherein the home network identity is an implicit home network identity or an explicit home network identity, wherein a presentation manner of an explicit home network identity comprises: inserting a home network identity to an original message format, a presentation manner of an implicit home network identity comprises: not changing an original message, carrying a home network identity in the original message;
wherein the inserting and the removing of the home network identity comprises a translation of different identities of a same home network user and the translation is translation between an explicit identity and an implicit identity or translation between implicit identities in different forms.

4. The method according to claim 3, wherein the home network identity specifically comprises: a home network user identity or an individual user identity that belongs to a home network user account.

5. A forwarding device, wherein the forwarding device is configured to: when a Digital Living Network Alliance, DLNA, automatic discovery packet sent by a physical DLNA device is intercepted in a transparent manner, encapsulate a protocol packet header in the DLNA automatic discovery packet, wherein the protocol packet header comprises a home network identity, and the home network identity uniquely identifies a home network on which the physical DLNA works; and send, in a direction from a home gateway, the DLNA automatic discovery packet in which the protocol packet header is encapsulated to a Cloud DLNA device, so that the Cloud DLNA device sends the DLNA automatic discovery packet to a virtual DLNA device corresponding to the home network identity after removing the protocol packet header from the DLNA automatic discovery packet, and therefore the virtual DLNA device discovers, by using the DLNA automatic discovery packet, the physical DLNA device corresponding to the home network identity, wherein the virtual DLNA device is a DLNA device that is virtualized on the Cloud DLNA device by using a virtualization technology and allocated for the home network, and there is a one-to-one mapping relationship between the home network identity, the physical DLNA device and the virtual DLNA device;
wherein the forwarding device is a broadband remote access server, BRAS; and
the BRAS is specifically configured to: after the DLNA automatic discovery packet from a broadband home network is intercepted in a transparent manner and the protocol packet header comprising the home network identity is encapsulated in the packet, send the DLNA automatic discovery packet in which the protocol packet header is encapsulated to the Cloud DLNA device;
wherein the home network identities between a home gateway, a BRAS, and a Cloud DLNA device are inconsistent;
wherein the home network identity is an implicit home network identity or an explicit home network identity, wherein a presentation manner of an explicit home network identity comprises: inserting a home network identity to an original message format, a presentation manner of an implicit home network identity comprises: not changing an original message, carrying a home network identity in the original message;
wherein the inserting and the removing of the home network identity comprises a translation of different identities of a same home network user and the translation is translation between an explicit identity and an implicit identity or translation between implicit identities in different forms.

6. The forwarding device according to claim 5, wherein the home network identity specifically comprises: a home network user identity or an individual user identity that belongs to a home network user account.

7. A system for automatically discovering a physical Digital Living Network Alliance, DLNA, device, wherein the system comprises:
a physical DLNA device, a forwarding device, and a Cloud DLNA device, wherein:
the Cloud DLNA device supports one or more virtual DLNA devices that are virtualized on the Cloud DLNA device by using a virtualization technology;
the forwarding device is configured to: when a DLNA automatic discovery packet sent by the physical DLNA device is intercepted in a transparent manner, encapsulate a protocol packet header in the DLNA automatic discovery packet, wherein the protocol packet header comprises a home network identity, and the home network identity uniquely identifies a home network on which the physical DLNA device works; and send, in a direction from a home gateway, the DLNA automatic discovery packet in which the protocol packet header is encapsulated to the Cloud DLNA device; and
the Cloud DLNA device is configured to send the DLNA automatic discovery packet to a virtual DLNA device corresponding to the home network identity after removing the protocol packet header from the DLNA automatic discovery packet, so that the virtual DLNA device discovers, by using the DLNA automatic discovery packet, the physical DLNA device corresponding to the home network identity; wherein the virtual DLNA device is allocated for the home network, and there is a one-to-one mapping relationship between the home network identity, the physical DLNA device and the virtual DLNA device;
wherein the forwarding device is a broadband remote access server, BRAS; and
the BRAS is specifically configured to: after the DLNA automatic discovery packet from a broadband home network is intercepted in a transparent manner and the protocol packet header comprising the home network identity is encapsulated in the packet, send the DLNA automatic discovery packet in which the protocol packet header is encapsulated to the Cloud DLNA device;
wherein the home network identities between a home gateway, a BRAS, and a Cloud DLNA device are inconsistent;
wherein the home network identity is an implicit home network identity or an explicit home network identity, wherein a presentation manner of an explicit home network identity comprises: inserting a home network identity to an original message format, a presentation manner of an implicit home network identity comprises: not changing an original message, carrying a home network identity in the original message;
wherein the inserting and the removing of the home network identity comprises a translation of different identities of a same home network user and the translation is translation between an explicit identity and an implicit identity or translation between implicit identities in different form.

8. The system according to claim 7, wherein the home network identity specifically comprises: a home network user identity or an individual user identity that belongs to a home network user account.

9. A system for automatically discovering a virtual Digital Living Network Alliance, DLNA, device, wherein the system comprises: a Cloud DLNA device, a forwarding device, and a physical DLNA device, wherein:
the Cloud DLNA device supports one or more virtual DLNA devices that are virtualized on the Cloud DLNA device by using a virtualization technology;
the Cloud DLNA device is configured to encapsulate, when a DLNA automatic discovery packet sent by a virtual DLNA device is intercepted in a transparent manner, a protocol packet header in the DLNA automatic discovery packet, wherein the packet header comprises a home network identity, and the home network identity uniquely identifies a home network, and the virtual DLNA device is allocated for the home network;
the Cloud DLNA device is further configured to send a DLNA automatic discovery packet in which the protocol packet header is encapsulated to the forwarding device;
the forwarding device is configured to remove the protocol packet header from the DLNA automatic discovery packet, and send the DLNA automatic discovery packet to the physical DLNA device corresponding to the home network identity, wherein the physical DLNA device works on the home network, and there is a one-to-one mapping relationship between the home network identity, the physical DLNA device and the virtual DLNA device; and
the physical DLNA device is configured to discover, by using the DLNA automatic discovery packet, the virtual DLNA device corresponding to the home network identity;
wherein the forwarding device is a broadband remote access server BRAS and a home gateway;
the BRAS is configured to remove the protocol packet header from the DLNA automatic discovery packet, and forward the DLNA automatic discovery packet to the home gateway; and
the home gateway is configured to send the DLNA automatic discovery packet to the physical DLNA device corresponding to the home network identity;
wherein the home network identities between a home gateway, a BRAS, and a Cloud DLNA device are inconsistent;
wherein the home network identity is an implicit home network identity or an explicit home network identity, wherein a presentation manner of an explicit home network identity comprises: inserting a home network identity to an original message format, a presentation manner of an implicit home network identity comprises: not changing an original message, carrying a home network identity in the original message;
wherein the inserting and the removing of the home network identity comprises a translation of different identities of a same home network user and the translation is translation between an explicit identity and an implicit identity or translation between implicit identities in different forms.

10. The system according to claim 9, wherein the home network identity specifically comprises: a home network user identity or an individual user identity that belongs to a home network user account.

## Patentansprüche

1. Verfahren zum automatischen Erkennen einer physischen Digital-Living-Network-Alliance-, DLNA-Vorrichtung in einer Richtung von einem Home-Gateway zu einer Cloud-DLNA-Vorrichtung, wobei das Verfahren Folgendes umfasst:
Kapseln (S11) eines Protokollpaketheaders in einem DLNA-Paket für die automatische Erkennung durch eine Weiterleitungsvorrichtung, wenn das von einer physischen DLNA-Vorrichtung gesendete DLNA-Paket für die automatische Erkennung von der Weiterleitungsvorrichtung auf transparente Art und Weise abgefangen wird, wobei der Protokollpaketheader eine Heimnetzwerkidentität umfasst und die Heimnetzwerkidentität ein Heimnetzwerk, in dem die physische DLNA-Vorrichtung arbeitet, eindeutig identifiziert; und
Senden (S12) des DLNA-Pakets für die automatische Erkennung, in dem der Protokollpaketheader gekapselt ist, durch die Weiterleitungsvorrichtung an die Cloud-DLNA-Vorrichtung, so dass die Cloud-DLNA-Vorrichtung das DLNA-Paket für die automatische Erkennung an eine virtuelle DLNA-Vorrichtung sendet, die der Heimnetzwerkidentität entspricht, nach dem Entfernen des Protokollpaketheaders aus dem DLNA-Paket für die automatische Erkennung, so dass die virtuelle DLNA-Vorrichtung unter Verwendung des DLNA-Pakets für die automatische Erkennung die physische DLNA-Vorrichtung erkennt, die der Heimnetzwerkidentität entspricht, wobei die virtuelle DLNA-Vorrichtung eine DLNA-Vorrichtung ist, die auf der Cloud-DLNA-Vorrichtung unter Verwendung einer Virtualisierungstechnologie virtualisiert wurde und dem Heimnetzwerk zugeordnet ist, und wobei eine Eins-zu-Eins-Zuordnungsbeziehung zwischen der Heimnetzwerkidentität, der physischen DLNA-Vorrichtung und der virtuellen DLNA-Vorrichtung besteht;
wobei das Verfahren insbesondere Folgendes ist:
Senden des DLNA-Pakets für die automatische Erkennung, in dem die Kapselung abgeschlossen ist, durch einen Breitbandfernzugriffsserver, BRAS, an die Cloud DLNA-Vorrichtung, nachdem der BRAS das DLNA-Paket für die automatische Erkennung von einem Breitbandheimnetzwerk auf transparente Art und Weise abgefangen hat und den Protokollpaketheader, der die Heimnetzwerkidentität umfasst, in dem Paket gekapselt hat, so dass die Cloud-DLNA-Vorrichtung das DLNA-Paket für die automatische Erkennung nach dem Entfernen des Protokollpaketheaders aus dem DLNA-Paket für die automatische Erkennung an die virtuelle DLNA-Vorrichtung sendet, die der Heimnetzwerkidentität entspricht, so dass die virtuelle DLNA-Vorrichtung unter Verwendung des DLNA-Pakets für die automatische Erkennung die physische DLNA-Vorrichtung erkennt, die der Heimnetzwerkidentität entspricht;
wobei die Heimnetzwerkidentitäten zwischen einem Home-Gateway, einem BRAS und einer Cloud-DLNA-Vorrichtung inkonsistent sind;
wobei die Heimnetzwerkidentität eine implizite Heimnetzwerkidentität oder eine explizite Heimnetzwerkidentität ist, wobei eine Art und Weise der Darstellung einer expliziten Heimnetzwerkidentität Folgendes umfasst: Einfügen einer Heimnetzwerkidentität in ein ursprüngliches Nachrichtenformat, wobei eine Art und Weise der Darstellung einer impliziten Heimnetzwerkidentität Folgendes umfasst: Nichtändern einer ursprünglichen Nachricht, und Übermitteln einer Heimnetzwerkidentität in der ursprünglichen Nachricht;
wobei das Einfügen und Entfernen der Heimnetzwerkidentität eine Übersetzung verschiedener Identitäten ein und desselben Heimnetzwerkbenutzers umfasst und die Übersetzung eine Übersetzung zwischen einer expliziten Identität und einer impliziten Identität oder eine Übersetzung zwischen impliziten Identitäten in verschiedenen Formen ist.

2. Verfahren nach Anspruch 1, wobei die Heimnetzwerkidentität insbesondere Folgendes umfasst:
eine Identität eines Heimnetzwerkbenutzers oder eine individuelle Identität eines Benutzers, die zu einem Konto des Heimnetzwerkbenutzers gehört.

3. Verfahren zum automatischen Erkennen einer virtuellen Digital-Living-Network-Alliance-, DLNA-Vorrichtung, wobei das Verfahren Folgendes umfasst:
Kapseln (S21) eines Protokollpaketheaders in dem DLNA-Paket für die automatische Erkennung durch eine Cloud-DLNA-Vorrichtung, wenn ein von einer virtuellen DLNA-Vorrichtung gesendetes DLNA-Paket für die automatische Erkennung von der Cloud-DLNA-Vorrichtung auf transparente Art und Weise abgefangen wird, wobei der Paketheader eine Heimnetzwerkidentität umfasst, wobei die Heimnetzwerkidentität ein Heimnetzwerk eindeutig identifiziert und die virtuelle DLNA-Vorrichtung eine DLNA-Vorrichtung ist, die auf der Cloud-DLNA-Vorrichtung unter Verwendung einer Virtualisierungstechnologie virtualisiert worden ist und dem Heimnetzwerk zugeordnet ist; und
Senden (S22) des DLNA-Pakets für die automatische Erkennung, in dem der Protokollpaketheader gekapselt ist, an eine Weiterleitungsvorrichtung durch die Cloud-DLNA-Vorrichtung, so dass die Weiterleitungsvorrichtung das DLNA-Paket für die automatische Erkennung an eine physische DLNA-Vorrichtung sendet, die der Heimnetzwerkidentität entspricht, nachdem sie den Protokollpaketheader aus dem DLNA-Paket für die automatische Erkennung entfernt hat, so dass die physische DLNA-Vorrichtung unter Verwendung des DLNA-Pakets für die automatische Erkennung die virtuelle DLNA-Vorrichtung erkennt, die der Heimnetzwerkidentität entspricht;
wobei eine Eins-zu-Eins-Zuordnungsbeziehung zwischen der Heimnetzwerkidentität, der physischen DLNA-Vorrichtung und der virtuellen DLNA-Vorrichtung besteht, wobei das Verfahren insbesondere Folgendes ist:
Kapseln des Protokollpaketheaders im Erkennungspaket durch eine Cloud-DLNA-Vorrichtung, nachdem die Cloud-DLNA-Vorrichtung das von dem virtuellen DLNA gesendete DLNA-Paket für die automatische Erkennung auf transparente Art und Weise abgefangen hat, wobei der Paketheader die Heimnetzwerkidentität umfasst; und
Senden des DLNA-Pakets für die automatische Erkennung, in dem der Protokollpaketheader gekapselt ist, an einen Breitbandfernzugriffsserver, BRAS, so dass der BRAS das DLNA-Paket für die automatische Erkennung an ein Home-Gateway weiterleitet, nachdem er den Protokollpaketheader aus dem DLNA-Paket für die automatische Erkennung entfernt hat, so dass das Home-Gateway das DLNA-Paket für die automatische Erkennung an die physische DLNA-Vorrichtung senden kann, die der Heimnetzwerkidentität entspricht, und die physische DLNA-Vorrichtung unter Verwendung des DLNA-Pakets für die automatische Erkennung die virtuelle DLNA-Vorrichtung erkennt, die der Heimnetzwerkidentität entspricht;
wobei die Heimnetzwerkidentitäten zwischen einem Home-Gateway, einem BRAS und einer Cloud-DLNA-Vorrichtung inkonsistent sind;
wobei die Heimnetzwerkidentität eine implizite Heimnetzwerkidentität oder eine explizite Heimnetzwerkidentität ist, wobei eine Art und Weise der Darstellung einer expliziten Heimnetzwerkidentität Folgendes umfasst: Einfügen einer Heimnetzwerkidentität in ein ursprüngliches Nachrichtenformat, wobei eine Art und Weise der Darstellung einer impliziten Heimnetzwerkidentität Folgendes umfasst: Nichtändern einer ursprünglichen Nachricht, und Übermitteln einer Heimnetzwerkidentität in der ursprünglichen Nachricht;
wobei das Einfügen und Entfernen der Heimnetzwerkidentität eine Übersetzung verschiedener Identitäten ein und desselben Heimnetzwerkbenutzers umfasst und die Übersetzung eine Übersetzung zwischen einer expliziten Identität und einer impliziten Identität oder eine Übersetzung zwischen impliziten Identitäten in verschiedenen Formen ist.

4. Verfahren nach Anspruch 3, wobei die Heimnetzwerkidentität insbesondere Folgendes umfasst:
eine Identität des Heimnetzwerkbenutzers oder eine individuelle Identität eines Benutzers, die zu einem Konto des Heimnetzwerkbenutzers gehört.

5. Weiterleitungsvorrichtung, wobei die Weiterleitungsvorrichtung konfiguriert ist zum:
Kapseln eines Protokollpaketheaders in dem DLNA-Paket für die automatische Erkennung, wenn ein von einer physischen Digital-Living-Network-Alliance-, DLNA-Vorrichtung gesendetes DLNA-Paket für die automatische Erkennung auf eine transparente Art und Weise abgefangen wird, wobei der Protokollpaketheader eine Heimnetzwerkidentität umfasst und die Heimnetzwerkidentität ein Heimnetzwerk, in dem die physische DLNA arbeitet, eindeutig identifiziert; und
Senden des DLNA-Pakets für die automatische Erkennung, in dem der Protokollpaketheader gekapselt ist, in einer Richtung von einem Home-Gateway an eine Cloud-DLNA-Vorrichtung, so dass die Cloud-DLNA-Vorrichtung das DLNA-Paket für die automatische Erkennung an eine virtuelle DLNA-Vorrichtung sendet, die der Heimnetzwerkidentität entspricht, nachdem der Protokollpaketheader aus dem DLNA-Paket für die automatische Erkennung entfernt worden ist, so dass die virtuelle DLNA-Vorrichtung unter Verwendung des DLNA-Pakets für die automatische Erkennung die physische DLNA-Vorrichtung erkennt, die der Heimnetzwerkidentität entspricht, wobei die virtuelle DLNA-Vorrichtung eine DLNA-Vorrichtung ist, die auf der Cloud-DLNA-Vorrichtung unter Verwendung einer Virtualisierungstechnologie virtualisiert worden ist und dem Heimnetzwerk zugeordnet ist, und wobei eine Eins-zu-Eins-Zuordnungsbeziehung zwischen der Heimnetzwerkidentität, der physischen DLNA-Vorrichtung und der virtuellen DLNA-Vorrichtung besteht;
wobei die Weiterleitungsvorrichtung ein Breitbandfernzugriffsserver, BRAS, ist; und
der BRAS insbesondere konfiguriert ist zum:
Senden des DLNA-Pakets für die automatische Erkennung, in dem der Protokollpaketheader gekapselt ist, an die Cloud-DLNA-Vorrichtung nach dem Abfangen des DLNA-Pakets für die automatische Erkennung aus einem Breitbandheimnetzwerk auf transparente Art und Weise und dem Kapseln des Protokollpaketheaders in dem Paket, das die Heimnetzwerkidentität umfasst,;
wobei die Heimnetzwerkidentitäten zwischen einem Home-Gateway, einem BRAS und einer Cloud-DLNA-Vorrichtung inkonsistent sind;
wobei die Heimnetzwerkidentität eine implizite Heimnetzwerkidentität oder eine explizite Heimnetzwerkidentität ist, wobei eine Art und Weise der Darstellung einer expliziten Heimnetzwerkidentität Folgendes umfasst: Einfügen einer Heimnetzwerkidentität in ein ursprüngliches Nachrichtenformat, wobei eine Art und Weise der Darstellung einer impliziten Heimnetzwerkidentität Folgendes umfasst: Nichtändern einer ursprünglichen Nachricht, und Übermitteln einer Heimnetzwerkidentität in der ursprünglichen Nachricht;
wobei das Einfügen und Entfernen der Heimnetzwerkidentität eine Übersetzung verschiedener Identitäten ein und desselben Heimnetzwerkbenutzers umfasst und die Übersetzung eine Übersetzung zwischen einer expliziten Identität und einer impliziten Identität oder eine Übersetzung zwischen impliziten Identitäten in verschiedenen Formen ist.

6. Weiterleitungsvorrichtung nach Anspruch 5, wobei die Heimnetzwerkidentität insbesondere Folgendes umfasst:
eine Identität eines Heimnetzwerkbenutzers oder eine individuelle Identität eines Benutzers, die zu einem Konto des Heimnetzwerkbenutzers gehört.

7. System zum automatischen Erkennen einer physischen Digital-Living-Network-Alliance-, DLNA-Vorrichtung, wobei das System Folgendes umfasst:
eine physische DLNA-Vorrichtung, eine Weiterleitungsvorrichtung und eine Cloud-DLNA-Vorrichtung, wobei:
die Cloud-DLNA-Vorrichtung eine oder mehrere virtuelle DLNA-Vorrichtungen unterstützt, die auf der Cloud-DLNA-Vorrichtung unter Verwendung einer Virtualisierungstechnologie virtualisiert werden;
die Weiterleitungsvorrichtung konfiguriert ist zum:
Kapseln eines Protokollpaketheaders in dem DLNA-Paket für die automatische Erkennung, wenn ein von einer physischen DLNA-Vorrichtung gesendetes DLNA-Paket für die automatische Erkennung auf eine transparente Art und Weise abgefangen wird, wobei der Protokollpaketheader eine Heimnetzwerkidentität umfasst und die Heimnetzwerkidentität ein Heimnetzwerk, in dem die physische DLNA arbeitet, eindeutig identifiziert; und
Senden des DLNA-Pakets für die automatische Erkennung, in dem der Protokollpaketheader gekapselt ist, in einer Richtung von einem Home-Gateway an eine Cloud-DLNA-Vorrichtung; und
wobei die Cloud-DLNA-Vorrichtung konfiguriert ist, um das DLNA-Paket für die automatische Erkennung an eine virtuelle DLNA-Vorrichtung zu senden, die der Heimnetzwerkidentität entspricht, nachdem der Protokollpaketheader aus dem DLNA-Paket für die automatische Erkennung entfernt wurde, so dass die virtuelle DLNA-Vorrichtung unter Verwendung des DLNA-Pakets für die automatische Erkennung die physische DLNA-Vorrichtung erkennt, die der Heimnetzwerkidentität entspricht;
wobei die virtuelle DLNA-Vorrichtung dem Heimnetzwerk zugeordnet ist und eine Eins-zu-Eins-Zuordnungsbeziehung zwischen der Heimnetzwerkidentität, der physischen DLNA-Vorrichtung und der virtuellen DLNA-Vorrichtung besteht;
wobei die Weiterleitungsvorrichtung ein Breitbandfernzugriffsserver, BRAS, ist; und
der BRAS insbesondere konfiguriert ist zum:
Senden des DLNA-Pakets für die automatische Erkennung, in dem der Protokollpaketheader gekapselt ist, an die Cloud-DLNA-Vorrichtung nach dem Abfangen des DLNA-Pakets für die automatische Erkennung aus einem Breitbandheimnetzwerk auf eine transparente Art und Weise und dem Kapseln des Protokollpaketheaders in dem Paket, das die Heimnetzwerkidentität umfasst;
wobei die Heimnetzwerkidentitäten zwischen einem Home-Gateway, einem BRAS und einer Cloud-DLNA-Vorrichtung inkonsistent sind;
wobei die Heimnetzwerkidentität eine implizite Heimnetzwerkidentität oder eine explizite Heimnetzwerkidentität ist, wobei eine Art und Weise der Darstellung einer expliziten Heimnetzwerkidentität Folgendes umfasst: Einfügen einer Heimnetzwerkidentität in ein ursprüngliches Nachrichtenformat, wobei eine Art und Weise der Darstellung einer impliziten Heimnetzwerkidentität Folgendes umfasst: Nichtändern einer ursprünglichen Nachricht, und Übermitteln einer Heimnetzwerkidentität in der ursprünglichen Nachricht;
wobei das Einfügen und Entfernen der Heimnetzwerkidentität eine Übersetzung verschiedener Identitäten ein und desselben Heimnetzwerkbenutzers umfasst und die Übersetzung eine Übersetzung zwischen einer expliziten Identität und einer impliziten Identität oder eine Übersetzung zwischen impliziten Identitäten in verschiedenen Formen ist.

8. System nach Anspruch 7, wobei die Heimnetzwerkidentität insbesondere Folgendes umfasst:
eine Identität des Heimnetzwerkbenutzers oder eine individuelle Identität eines Benutzers, die zu einem Konto des Heimnetzwerkbenutzers gehört.

9. System zum automatischen Erkennen einer virtuellen Digital-Living-Network-Alliance-, DLNA-Vorrichtung, wobei das System Folgendes umfasst:
eine Cloud-DLNA-Vorrichtung, eine Weiterleitungsvorrichtung und eine physische DLNA-Vorrichtung, wobei:
die Cloud-DLNA-Vorrichtung eine oder mehrere virtuelle DLNA-Vorrichtungen unterstützt, die auf der Cloud-DLNA-Vorrichtung unter Verwendung einer Virtualisierungstechnologie virtualisiert werden;
die Cloud-DLNA-Vorrichtung konfiguriert ist, um einen Protokollpaketheader im DLNA-Paket für die automatische Erkennung zu kapseln, wenn ein von einer virtuellen DLNA-Vorrichtung gesendetes DLNA-Paket für die automatische Erkennung auf transparente Art und Weise abgefangen wird, wobei der Paketheader eine Heimnetzwerkidentität umfasst und die Heimnetzwerkidentität ein Heimnetzwerk eindeutig identifiziert, und wobei die virtuelle DLNA-Vorrichtung dem Heimnetzwerk zugeordnet ist;
die Cloud-DLNA-Vorrichtung ferner konfiguriert ist, um ein DLNA-Paket für die automatische Erkennung zu senden, in dem der Protokollpaketheader an die Weiterleitungsvorrichtung gekapselt ist;
die Weiterleitungsvorrichtung konfiguriert ist, um den Protokollpaketheader aus dem DLNA-Paket für die automatische Erkennung zu entfernen und das DLNA-Paket für die automatische Erkennung an die physische DLNA-Vorrichtung, die der Heimnetzwerkidentität entspricht, zu senden, wobei die physische DLNA-Vorrichtung im Heimnetzwerk arbeitet und wobei eine Eins-zu-Eins-Zuordnungsbeziehung zwischen der Heimnetzwerkidentität, der physischen DLNA-Vorrichtung und der virtuellen DLNA-Vorrichtung besteht; und
die physische DLNA-Vorrichtung konfiguriert ist, um unter Verwendung des DLNA-Pakets für die automatische Erkennung die virtuelle DLNA-Vorrichtung zu erkennen, die der Heimnetzwerkidentität entspricht;
wobei die Weiterleitungsvorrichtung ein Breitbandfernzugriffsserver (BRAS) und ein Home-Gateway ist;
der BRAS konfiguriert ist, um den Protokollpaketheader aus dem DLNA-Paket für die automatische Erkennung zu entfernen und das DLNA-Paket für die automatische Erkennung an das Home-Gateway weiterzuleiten; und
das Home-Gateway konfiguriert ist, um das DLNA-Paket für die automatische Erkennung an die physische DLNA-Vorrichtung zu senden, die der Heimnetzwerkidentität entspricht;
wobei die Heimnetzwerkidentitäten zwischen einem Home-Gateway, einem BRAS und einer Cloud-DLNA-Vorrichtung inkonsistent sind;
wobei die Heimnetzwerkidentität eine implizite Heimnetzwerkidentität oder eine explizite Heimnetzwerkidentität ist, wobei eine Art und Weise der Darstellung einer expliziten Heimnetzwerkidentität Folgendes umfasst: Einfügen einer Heimnetzwerkidentität in ein ursprüngliches Nachrichtenformat, wobei eine Art und Weise der Darstellung einer impliziten Heimnetzwerkidentität Folgendes umfasst: Nichtändern einer ursprünglichen Nachricht, und Übermitteln einer Heimnetzwerkidentität in der ursprünglichen Nachricht;
wobei das Einfügen und Entfernen der Heimnetzwerkidentität eine Übersetzung verschiedener Identitäten ein und desselben Heimnetzwerkbenutzers umfasst und die Übersetzung eine Übersetzung zwischen einer expliziten Identität und einer impliziten Identität oder eine Übersetzung zwischen impliziten Identitäten in verschiedenen Formen ist.

10. System nach Anspruch 9, wobei die Heimnetzwerkidentität insbesondere Folgendes umfasst:
eine Identität eines Heimnetzwerkbenutzers oder eine individuelle Identität eines Benutzers, die zu einem Konto des Heimnetzwerkbenutzers gehört.

## Revendications

1. Procédé de découverte automatique d'un dispositif physique Digital Living Network Alliance (DLNA) dans une direction allant d'une passerelle domestique à un dispositif DLNA en nuage, le procédé comprenant :
l'encapsulation (S11), par un dispositif de transfert, lorsqu'un paquet de découverte automatique DLNA envoyé par un dispositif DLNA physique est intercepté par le dispositif de transfert de manière transparente, d'un en-tête de paquet de protocole dans le paquet de découverte automatique DLNA, l'en-tête de paquet de protocole comprenant une identité de réseau domestique, et l'identité de réseau domestique identifiant de manière unique un réseau domestique sur lequel le dispositif DLNA physique fonctionne ; et
l'envoi (S12), par le dispositif de transfert, du paquet de découverte automatique DLNA dans lequel l'en-tête du paquet de protocole est encapsulé, au dispositif DLNA en nuage, de sorte que le dispositif DLNA en nuage envoie le paquet de découverte automatique DLNA à un dispositif DLNA virtuel correspondant à l'identité de réseau domestique après la suppression de l'en-tête de paquet de protocole du paquet de découverte automatique DLNA, et, par conséquent, le dispositif DLNA virtuel découvre, en utilisant le paquet de découverte automatique DLNA, le dispositif DLNA physique correspondant à l'identité de réseau domestique ;
le dispositif DLNA virtuel étant un dispositif DLNA virtualisé sur le dispositif DLNA en nuage en utilisant une technologie de virtualisation, et alloué au réseau domestique, et une relation de correspondance terme à terme existant entre l'identité de réseau domestique, le dispositif DLNA physique et le dispositif DLNA virtuel ;
le procédé comprenant spécifiquement :
l'envoi, par un serveur d'accès à distance à large bande (BRAS), après que celui-ci a intercepté de manière transparente le paquet de découverte automatique DLNA d'un réseau domestique à large bande et encapsulé l'en-tête de paquet de protocole comprenant l'identité de réseau domestique dans le paquet, du paquet de découverte automatique DLNA dans lequel l'encapsulation a lieu au dispositif DLNA en nuage, de sorte que le dispositif DLNA en nuage envoie le paquet de découverte automatique DLNA au dispositif DLNA virtuel correspondant à l'identité du réseau domestique après la suppression de l'en-tête de paquet de protocole du paquet de découverte automatique DLNA, et, par conséquent, le dispositif DLNA virtuel découvre, en utilisant le paquet de découverte automatique DLNA, le dispositif DLNA physique correspondant à l'identité de réseau domestique ;
les identités de réseau domestique entre une passerelle domestique, un BRAS et un dispositif DLNA en nuage étant incompatibles ;
l'identité de réseau domestique étant une identité de réseau domestique implicite ou une identité de réseau domestique explicite, un mode de présentation d'une identité de réseau domestique explicite comprenant de :
insérer une identité de réseau domestique dans un format de message d'origine, un mode de présentation d'une identité de réseau domestique implicite comprenant de :
ne pas modifier un message d'origine, à transporter une identité de réseau domestique dans le message d'origine ;
l'insertion et la suppression de l'identité de réseau domestique comprenant de translater différentes identités d'un même utilisateur de réseau domestique, et la translation étant une translation entre une identité explicite et une identité implicite ou une translation entre des identités implicites sous différentes formes.

2. Procédé selon la revendication 1, dans lequel l'identité de réseau domestique comprend spécifiquement :
une identité d'utilisateur de réseau domestique ou une identité d'utilisateur individuel appartenant à un compte d'utilisateur de réseau domestique.

3. Procédé de découverte automatique d'un dispositif virtuel Digital Living Network Alliance (DLNA), le procédé comprenant :
l'encapsulation (S21), par un dispositif DLNA en nuage, lorsqu'un paquet de découverte automatique DLNA envoyé par un dispositif DLNA virtuel est intercepté de manière transparente par le dispositif DLNA en nuage, d'un en-tête de paquet de protocole dans le paquet de découverte automatique DLNA, l'en-tête de paquet comprenant une identité de réseau domestique, l'identité de réseau domestique identifiant de manière unique un réseau domestique, et le dispositif DLNA virtuel étant un dispositif DLNA virtualisé sur le dispositif DLNA en nuage en utilisant une technologie de virtualisation, et alloué au réseau domestique ; et
l'envoi (S22), par le dispositif DLNA en nuage, du paquet de découverte automatique DLNA dans lequel l'en-tête du paquet de protocole est encapsulé, à un dispositif de transfert, de sorte que le dispositif de transfert envoie le paquet de découverte automatique DLNA à un dispositif DLNA physique correspondant à l'identité de réseau domestique après la suppression de l'en-tête de paquet de protocole du paquet de découverte automatique DLNA, et, par conséquent, le dispositif DLNA physique découvre, en utilisant le paquet de découverte automatique DLNA, le dispositif DLNA virtuel correspondant à l'identité de réseau domestique ;
une relation de correspondance terme à terme existant entre l'identité de réseau domestique, le dispositif DLNA physique et le dispositif DLNA virtuel, le procédé comprenant spécifiquement :
l'encapsulation, par un dispositif DLNA en nuage, après que le dispositif DLNA en nuage a intercepté de manière transparente le paquet de découverte automatique DLNA envoyé par le dispositif DLNA virtuel, de l'en-tête de paquet de protocole dans le paquet de découverte, l'en-tête de paquet comprenant l'identité de réseau domestique ; et
l'envoi du paquet de découverte automatique DLNA dans lequel l'en-tête de paquet de protocole est encapsulé à un serveur d'accès à distance à large bande (BRAS), de sorte que le BRAS transfère le paquet de découverte automatique DLNA à une passerelle domestique après la suppression de l'en-tête de paquet de protocole du paquet de découverte automatique DLNA, et, par conséquent, la passerelle domestique peut envoyer le paquet de découverte automatique DLNA au dispositif DLNA physique correspondant à l'identité de réseau domestique, et le périphérique DLNA physique découvre, en utilisant le paquet de découverte automatique DLNA, le dispositif DLNA virtuel correspondant à l'identité de réseau domestique ;
les identités de réseau domestique entre une passerelle domestique, un BRAS et un dispositif DLNA en nuage étant incompatibles ;
l'identité de réseau domestique étant une identité de réseau domestique implicite ou une identité de réseau domestique explicite, un mode de présentation d'une identité de réseau domestique explicite comprenant de :
insérer une identité de réseau domestique dans un format de message d'origine, un mode de présentation d'une identité de réseau domestique implicite comprenant de :
ne pas modifier un message d'origine, à transporter une identité de réseau domestique dans le message d'origine ;
l'insertion et la suppression de l'identité de réseau domestique consistant à translater différentes identités d'un même utilisateur de réseau domestique, et la translation étant une translation entre une identité explicite et une identité implicite ou une translation entre des identités implicites sous différentes formes.

4. Procédé selon la revendication 3, dans lequel l'identité de réseau domestique comprend spécifiquement :
une identité d'utilisateur de réseau domestique ou une identité d'utilisateur individuel appartenant à un compte d'utilisateur de réseau domestique.

5. Dispositif de transfert, le dispositif de transfert étant configuré pour :
encapsuler un en-tête de paquet de protocole dans le paquet de découverte automatique DLNA lorsqu'un paquet de découverte automatique d'alliance de réseau vivant numérique (DLNA) envoyé par un dispositif DLNA physique est intercepté de manière transparente, l'en-tête de paquet de protocole comprenant l'identité de réseau domestique, et l'identité de réseau domestique identifiant de manière unique un réseau domestique sur lequel le dispositif DLNA physique fonctionne ; et
envoyer, dans une direction depuis une passerelle domestique, le paquet de découverte automatique DLNA dans lequel l'en-tête de paquet de protocole est encapsulé dans un dispositif DLNA en nuage, de sorte que le dispositif DLNA en nuage envoie le paquet de découverte automatique DLNA à un dispositif DLNA virtuel correspondant à l'identité de réseau domestique après la suppression de l'en-tête de paquet de protocole du paquet de découverte automatique DLNA, et, par conséquent, le dispositif DLNA virtuel découvre, en utilisant le paquet de découverte automatique DLNA, le dispositif DLNA physique correspondant à l'identité de réseau domestique, le dispositif DLNA virtuel étant un dispositif DLNA virtualisé sur le dispositif DLNA en nuage en utilisant une technologie de virtualisation, et alloué au réseau domestique, et une relation de correspondance terme à terme existant entre l'identité de réseau domestique, le dispositif DLNA physique et le dispositif DLNA virtuel ;
le dispositif de transfert étant un serveur d'accès à distance à large bande (BRAS) ; et
le BRAS étant spécifiquement configuré pour :
envoyer le paquet de découverte automatique DLNA dans lequel l'en-tête de paquet de protocole est encapsulé au dispositif DLNA en nuage, une fois que le paquet de découverte automatique DLNA provenant d'un réseau domestique à large bande est intercepté de manière transparente et que l'en-tête de paquet de protocole comprenant l'identité de réseau domestique est encapsulé dans le paquet ;
les identités de réseau domestique entre une passerelle domestique, un BRAS et un dispositif DLNA en nuage étant incompatibles ;
l'identité de réseau domestique étant une identité de réseau domestique implicite ou une identité de réseau domestique explicite, un mode de présentation d'une identité de réseau domestique explicite comprenant de :
insérer une identité de réseau domestique dans un format de message d'origine, un mode de présentation d'une identité de réseau domestique implicite comprenant de :
ne pas modifier un message d'origine, à transporter une identité de réseau domestique dans le message d'origine ;
l'insertion et la suppression de l'identité de réseau domestique consistant à translater différentes identités d'un même utilisateur de réseau domestique, et la translation étant une translation entre une identité explicite et une identité implicite ou une translation entre des identités implicites sous différentes formes.

6. Dispositif de transfert selon la revendication 5, dans lequel l'identité de réseau domestique comprend spécifiquement :
une identité d'utilisateur de réseau domestique ou une identité d'utilisateur individuel appartenant à un compte d'utilisateur de réseau domestique.

7. Système de découverte automatique d'un dispositif d'alliance de réseau vivant numérique (DLNA) physique, le système comprenant :
un dispositif DLNA physique, un dispositif de transfert et un dispositif DLNA en nuage,
le dispositif DLNA en nuage prenant en charge au moins un dispositif DLNA virtuel virtualisé sur le dispositif DLNA en nuage en utilisant une technologie de virtualisation ;
le dispositif de transfert étant configuré pour :
encapsuler un en-tête de paquet de protocole dans le paquet de découverte automatique DLNA lorsqu'un paquet de découverte automatique DLNA envoyé par le dispositif physique DLNA est intercepté de manière transparente, l'en-tête de paquet de protocole comprenant une identité de réseau domestique, et l'identité de réseau domestique identifiant de manière unique un réseau domestique sur lequel le dispositif DLNA physique fonctionne ; et
envoyer, dans une direction depuis une passerelle domestique, le paquet de découverte automatique DLNA dans lequel l'en-tête de paquet de protocole est encapsulé au dispositif DLNA en nuage ; et
le dispositif DLNA en nuage étant configuré pour envoyer le paquet de découverte automatique DLNA à un dispositif DLNA virtuel correspondant à l'identité du réseau domestique après la suppression de l'en-tête du paquet de protocole du paquet de découverte automatique DLNA, de sorte que le dispositif DLNA virtuel découvre, en le paquet de découverte automatique DLNA, le dispositif DLNA physique correspondant à l'identité du réseau domestique ;
le dispositif DLNA virtuel étant alloué au réseau domestique, et une relation de correspondance terme à terme existant entre l'identité de réseau domestique, le dispositif DLNA physique et le dispositif DLNA virtuel ;
le dispositif de transfert étant un serveur d'accès à distance à large bande (BRAS) ; et
le BRAS étant spécifiquement configuré pour :
envoyer le paquet de découverte automatique DLNA dans lequel l'en-tête de paquet de protocole est encapsulé au dispositif DLNA en nuage, une fois que le paquet de découverte automatique DLNA provenant d'un réseau domestique à large bande est intercepté de manière transparente et que l'en-tête de paquet de protocole comprenant l'identité de réseau domestique est encapsulé dans le paquet ;
les identités de réseau domestique entre une passerelle domestique, un BRAS et un dispositif DLNA en nuage étant incompatibles ;
l'identité de réseau domestique étant une identité de réseau domestique implicite ou une identité de réseau domestique explicite, un mode de présentation d'une identité de réseau domestique explicite consistant à :
insérer une identité de réseau domestique dans un format de message d'origine, un mode de présentation d'une identité de réseau domestique implicite consistant à :
ne pas modifier un message d'origine, à transporter une identité de réseau domestique dans le message d'origine ;
l'insertion et la suppression de l'identité de réseau domestique consistant à translater différentes identités d'un même utilisateur de réseau domestique, et la translation étant une translation entre une identité explicite et une identité implicite ou une translation entre des identités implicites sous une forme différente.

8. Système selon la revendication 7, dans lequel l'identité de réseau domestique comprend spécifiquement :
une identité d'utilisateur de réseau domestique ou une identité d'utilisateur individuel appartenant à un compte d'utilisateur de réseau domestique.

9. Système de découverte automatique d'un dispositif d'alliance de réseau vivant numérique (DLNA) virtuel, le système comprenant :
un dispositif DLNA en nuage, un dispositif de transfert et un dispositif DLNA physique,
le dispositif DLNA en nuage prenant en charge au moins un dispositif DLNA virtuel virtualisé sur le dispositif DLNA en nuage en utilisant une technologie de virtualisation ;
le dispositif DLNA en nuage étant configuré pour encapsuler, lorsqu'un paquet de découverte automatique DLNA envoyé par un dispositif DLNA virtuel est intercepté de manière transparente, d'un en-tête de paquet de protocole dans le paquet de découverte automatique DLNA, l'en-tête de paquet comprenant une identité de réseau domestique, l'identité de réseau domestique identifiant de manière unique un réseau domestique, et le dispositif DLNA virtuel étant alloué au réseau domestique ;
le dispositif DLNA en nuage étant en outre configuré pour envoyer un paquet de découverte automatique DLNA dans lequel l'en-tête de paquet de protocole est encapsulé au dispositif de transfert ;
le dispositif de transfert étant configuré pour supprimer l'en-tête de paquet de protocole du paquet de découverte automatique DLNA, et envoyer le paquet de découverte automatique DLNA au dispositif DLNA physique correspondant à l'identité de réseau domestique, le dispositif DLNA physique fonctionnant sur le réseau domestique, et une relation de correspondance terme à terme existant entre l'identité de réseau domestique, le dispositif DLNA physique et le dispositif DLNA virtuel ; et
le dispositif DLNA physique étant configuré pour découvrir, en utilisant le paquet de découverte automatique DLNA, le dispositif DLNA virtuel correspondant à l'identité de réseau domestique ;
le dispositif de transfert étant un serveur d'accès à distance à large bande (BRAS) et une passerelle domestique ;
le BRAS étant configuré pour supprimer l'en-tête de paquet de protocole du paquet de découverte automatique DLNA, et transférer le paquet de découverte automatique DLNA à la passerelle domestique ; et
la passerelle domestique étant configurée pour envoyer le paquet de découverte automatique DLNA au dispositif DLNA physique correspondant à l'identité de réseau domestique ;
les identités de réseau domestique entre une passerelle domestique, un BRAS et un dispositif DLNA en nuage étant incompatibles ;
l'identité de réseau domestique étant une identité de réseau domestique implicite ou une identité de réseau domestique explicite, un mode de présentation d'une identité de réseau domestique explicite comprenant de :
insérer une identité de réseau domestique dans un format de message d'origine, un mode de présentation d'une identité de réseau domestique implicite comprenant de :
ne pas modifier un message d'origine, à transporter une identité de réseau domestique dans le message d'origine ;
l'insertion et la suppression de l'identité de réseau domestique consistant à translater différentes identités d'un même utilisateur de réseau domestique, et la translation étant une translation entre une identité explicite et une identité implicite ou une translation entre des identités implicites sous différentes formes.

10. Système selon la revendication 9, dans lequel l'identité de réseau domestique comprend spécifiquement :
une identité d'utilisateur de réseau domestique ou une identité d'utilisateur individuel appartenant à un compte d'utilisateur de réseau domestique.
